(19) Europäisches Patentamt
European Patent Office
Office européen des brevets

(11) Veröffentlichungsnummer: **0 234 474 B1**

(12) **EUROPÄISCHE PATENTSCHRIFT**

(45) Veröffentlichungstag der Patentschrift: **13.05.92**

(51) Int. Cl.5: **C09B 67/54**, C09B 67/10, D06P 3/54, //C09B29/09

(21) Anmeldenummer: **87102175.4**

(22) Anmeldetag: **16.02.87**

(54) **Gamma-Modifikation eines Benzisothiazolfarbstoffs.**

(30) Priorität: **27.02.86 DE 3606379**

(43) Veröffentlichungstag der Anmeldung:
**02.09.87 Patentblatt 87/36**

(45) Bekanntmachung des Hinweises auf die Patenterteilung:
**13.05.92 Patentblatt 92/20**

(84) Benannte Vertragsstaaten:
**CH DE FR GB LI**

(56) Entgegenhaltungen:
**EP-A- 0 031 478**
**EP-A- 0 167 913**
**DE-A- 3 200 969**
**FR-A- 2 441 644**
**LU-A- 56 463**

(73) Patentinhaber: **BAYER AG**

**W-5090 Leverkusen 1 Bayerwerk(DE)**

(72) Erfinder: **Brandt, Horst, Dr.**
**Antoniusstrasse 4**
**W-5068 Odenthal(DE)**
Erfinder: **Leverenz, Klaus, Dr.**
**Heymannstrasse 44**
**W-5090 Leverkusen 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.08/2.19/2.0)

## Beschreibung

Gegenstand der Erfindung ist die färbebadstabile γ-Modifikation des Azofarbstoffs der Formel

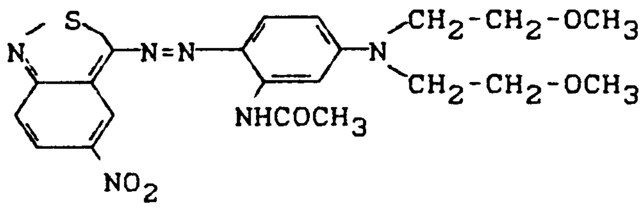

mit den Netzebenenabständen D/Å 3,13, 3,36, 4,85, 9,26 und 13,94 der fünf stärksten Linien mit den relativen Intensitäten 98, 89, 82, 100 und 87.

Die angegebenen Intensitäten werden repräsentativ aus dem in Fig. 1 dargestellten Diffraktometerdiagramm, aufgenommen bei einer Wellenlänge λ = 1,54060 Å, entnommen.

Der Farbstoff der angegebenen Formel - als solcher - ist bekannt (vgl. EP-A 0 167 913). Bei der Synthese gemäß Beispiel 1 dieser Patentpublikation wird der isolierte saure Farbstoffpreßkuchen in Wasser erneut suspendiert, mit Natronlauge ein pH von 7,5 bis 6 eingestellt, durch direkte Dampfeinleitung auf 60 °C erhitzt und bei 60 bis 70 °C während 4 Stunden getempert. Anschließend wird der Farbstoff aus der auf 50 °C abgekühlten Dispersion isoliert. Das getrocknete Farbstoffpulver liegt dann in der α-Modifikation mit den Netzebenenabständen d/Å 3,41, 3,86, 3,93 und 4,04 und den relativen Intensitäten 100, 75, 47 und 45 vor (Fig. 2).

Wird die Kupplung in Gegenwart eines nichtionogenen Tensids vorgenommen und nach erfolgter Umsetzung die Reaktionsbrühe mit Natronlauge auf pH = 2 bis 2.2 gestellt, eine Stunde bei 60 °C gehalten und anschließend heiß isoliert, so entsteht die β-Modifikation mit den Netzebenen der fünf stärksten Linien d/Å 3,43, 3,80, 3,96, 5,09 und 6,48 mit den relativen Intensitäten 100, 30, 38, 29 und 31 (Fig. 3).

Die erfindungsgemäße γ-Modifikation (Fp. 160 °C; $\lambda_{max}$ 622,5 nm in DMF) wird demgegenüber beispielsweise durch Temperung einer wäßrigen Anschlämmung der α-Modifikation in Gegenwart eines anionischen Dispergiermittels und eines nichtionischen Emulgators erhalten.

Die beanspruchte γ-Modifikation kann z.B. durch thermische Behandlung der α-Modifikation bei 130 ° bis 150 °C in 5 bis 10 Stunden hergestellt werden. Vorzugsweise erfolgt die Umwandlung während der Formierung in Gegenwart von z.B. Ligninsulfonsäuren und Abietinsäureethylenoxid-Umsetzungsprodukten bei einer Kesseltemperatur von 80-85 °C in 2 bis 4 Stunden oder bevorzugt während einiger Passagen in der Perlmühle bei Durchlaufzeiten von 40 bis 60 Minuten.

Der Vorteil dieser γ-Modifikation liegt in der erhöhten Stabilität gegen Agglomeration und Rekristallisation beim HT-Färben, insbesondere aber beim Carrierfärben von Polyesterfasern. Die β-Modifikation geht beim Tempern ebenfalls in die γ-Modifikation über.

Die Temperung kann alternativ auch mit Kombinationen von synthetischen Dispergiermitteln, wie Reaktionsprodukten aus Naphthalin, Schwefelsäure und Formaldehyd oder Tolylether, Formaldehyd und Natriumhydrogensulfit und nichtionogenen Tensiden sowie deren Gemische mit Ligninsulfonaten erfolgen.

Beispiel

900 g eines 35 %igen Preßkuchens hergestellt durch Diazotierung, Kupplung und Temperung gemäß EP-A 0 167 913, Beispiel 1 werden mit 470 g eines Ligninsulfonates zu einem Mahlteig angeschlagen, dem 2 %, bezogen auf den Rohfarbstoffanteil, eines Abietinsäureethylenoxyadduktes und 100 g Wasser zugesetzt werden. Diese Suspension wird zunächst einmal bei Raumtemperatur und dann zweimal in einer 1 l-Perlmühle mit Glasperlen der Größe 31/8 bei 80 bis 85 °C Mahlguttemperatur bei einer mittleren Verweilzeit von 30 Minuten pro Durchgang zerkleinert. Danach wird die Suspension in weiteren 3 Passagen bei Raumtemperatur bis zu einer Feinheit von 1 bis 2 µm gemahlen. Der Mahlteig wird mit weiteren 120 g Dispergiermittel und einem Entstaubungsmittel versetzt und sprühgetrocknet. Das erhaltene Farbstoffpräparat mit einem Farbstoffanteil von 31 % kann unmittelbar in üblicher Weise in ein Färbebad zum Färben von Polyesterfasern eingebracht werden.

## Patentansprüche

1. Färbestabile Modifikation des Azofarbstoffs der Formel

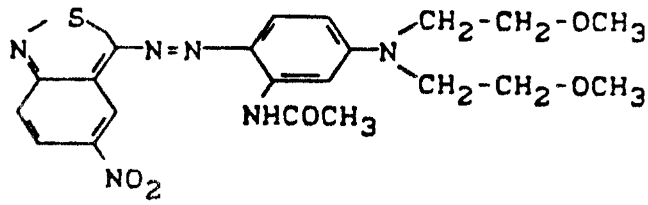

gekennzeichnet durch deren Netzebenenabstände D/Å 3,13, 3,36, 4,85, 9,26 und 13,94 der fünf stärksten Linien mit den relativen Intensitäten 98, 89, 82, 100 und 87.

2. Verfahren zur Herstellung der Farbstoffmodifikation gemäß Anspruch 1, dadurch gekennzeichnet, daß man die $\alpha$-Modifikation dieses Farbstoffs mit den Netzebenenabständen d/Å 3,41, 3,49, 3,93 und 4,06 und den relativen Intensitäten 100, 90, 41 und 48 bzw. die $\beta$-Modifikation mit den Netzebenenabständen d/Å 3,43, 3,80, 3,96, 5,09 und 6,48 mit den relativen Intensitäten 100, 30, 38, 29 und 31 in Gegenwart eines anionischen Dispergiermittels und eines nichtionischen Emulgators tempert.

3. Verwendung der Farbstoffmodifikation gemäß Anspruch 1 zum Färben von Polyesterfasern.

## Claims

1. Modification, stable to dyeing, of the azo dyestuff of the formula

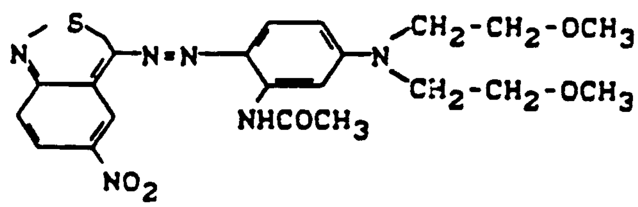

characterised by its interplanar spacings d/Å 3.13, 3.36, 4.85, 9.26 and 13.94 of the five strongest lines having the relative intensities 98, 89, 82, 100 and 87.

2. Process for the preparation of the dyestuff modification according to Claim 1, characterised in that the $\alpha$-modification of this dyestuff, having interplanar spacings d/Å 3.41, 3.49, 3.93 and 4.06 and relative intensities 100, 90, 41 and 48, or the $\beta$-modification, having the interplanar spacings d/Å 3.43, 3.80, 3.96, 5.09 and 6.48 with the relative intensities 100, 30, 38, 29 and 31, is tempered in the presence of an anionic dispersing agent and a non-ionic emulsifier.

3. Use of the dyestuff modification according to Claim 1 for dyeing polyester fibres.

## Revendications

1. Modification stable en baim de teinture du colorant azoïque de formule

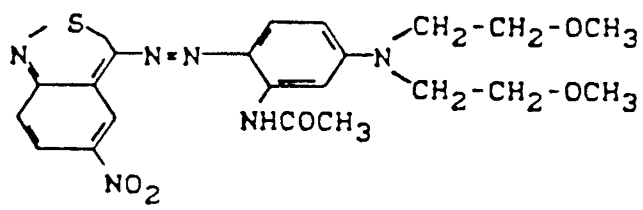

caractérisée par des distances entre plans réticulaires d/Å de 3,13, 3,36, 4,85, 9,26 et 13,94 des cinq raies les plus intenses avec les intensités relatives de 98, 89, 82, 100 et 87.

2. Procédé de production de la modification de colorant suivant la revendication 1, caractérisé en ce qu'on soumet à un étuvage en présence d'un dispersant anionique et d'un émulsionnant non ionique la modification $\alpha$ de ce colorant avec les distances entre plans réticulaires d/Å de 3,41, 3,49, 3,93 et 4,06 et les intensités relatives de 100, 90, 41 et 48 ou respectivement la modification $\beta$ avec les distances entre plans réticulaires d/Å de 3,43, 3,80, 3,96, 5,09 et 6,48 et avec les intensités relatives de 100, 30, 38, 29 et 31.

3. Utilisation de la modification de colorant suivant la revendication 1 pour la teinture de fibres de polyesters.

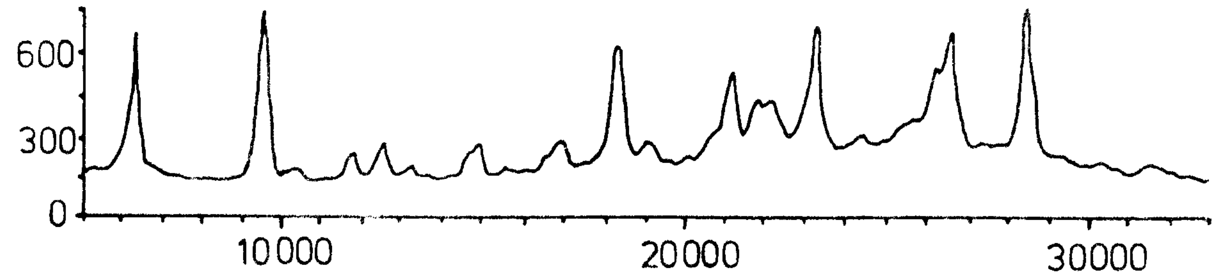


FIG. 1

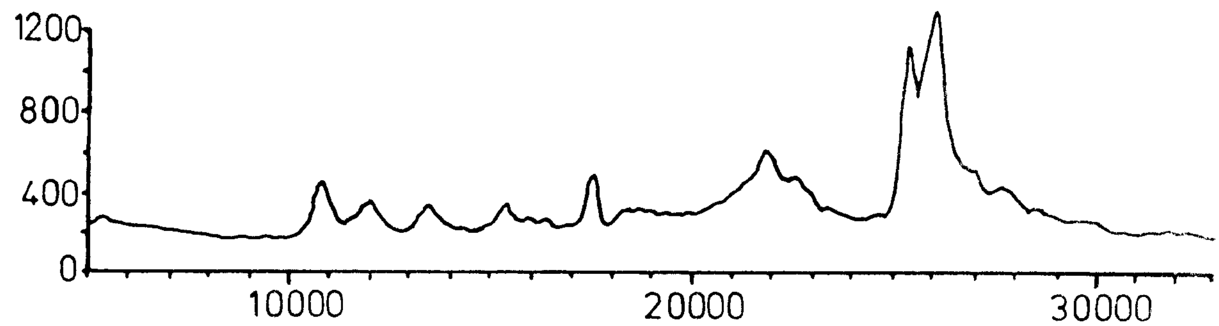


FIG. 2

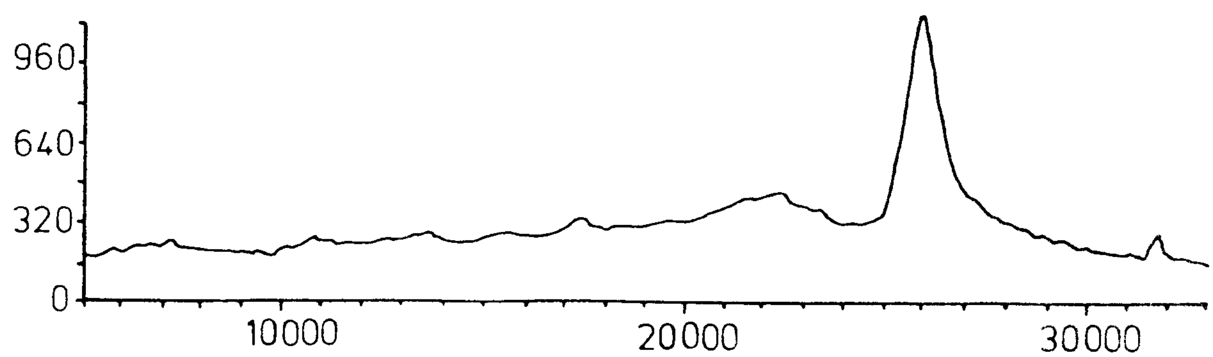


FIG. 3